# EUROPEAN PATENT SPECIFICATION

(11) **EP 4 158 200 B1**
(45) Date of publication and mention of the grant of the patent: **17.04.2024**
(21) Application number: 21733050.5
(22) Date of filing: 07.06.2021
(51) Int. Cl.: F04D 7/08, F04D 9/00, F04D 13/04, F04D 29/42, F04D 29/58, G21C 15/18, G21C 15/243

(54) **TURBOPUMP AND LONG-TERM HEAT REMOVAL SYSTEM FROM A HERMETIC ZONE, WHICH CONTAINS THE TURBOPUMP**
TURBOPUMPE UND LANGZEITWÄRMEABFUHRSYSTEM AUS EINER DIE TURBOPUMPE ENTHALTENDEN HERMETISCHEN ZONE
TURBOPOMPE ET SYSTÈME D'ÉLIMINATION DE CHALEUR À LONG TERME D'UNE ZONE HERMÉTIQUE CONTENANT LA TURBOPOMPE

(30) Priority: 12.06.2020 CZ 20200341
(43) Date of publication of application: 05.04.2023
(73) Proprietor: Centrum Hydraulickeho Vyzkumu Spol. s R.O., Lutin (CZ)
(72) Inventor: KOMAREK, Martin, 79843 Pteni (CZ); VYROUBAL, Michal, 77900 Olomouc (CZ); SOUKAL, Jiri, 77900 Olomouc (CZ); ZAVADIL, Lukas, 78391 Unicov (CZ)
(74) Representative: Benda, Tomas
(86) International application number: PCT/CZ2021/050061
(87) International publication number: WO 2021/249584

(56) References cited:
- EP-A1- 2 549 484
- WO-A1-2018/060633
- CZ-U1- 33 250
- KZ-A4- 20 573
- KZ-U- 251
- RU-C1- 2 030 801
- RU-C1- 2 043 789
- RU-U1- 96 283
- RU-U1- 112 957
- US-A1- 2013 301 789

## Description

### Background of the Invention

The invention concerns a turbopump and a long-term heat removal system from a hermetic zone, which contains the turbopump.

### State of the art

Efforts to constantly increase the safety of nuclear power plants and experience of accidents that have already been overcome lead to a sophisticated typology of failures and accidents, which are described as predictable and which are in a specific way standardized. For these events, usually of a smaller scale, such systems are already solved and implemented in the technological equipment of the power plant, in the project of the nuclear power plant itself.

The conditions and physical parameters in the hermetic part of the nuclear reactor are at the boiling point of the liquid filler, which is a mixture of water and boric acid (HBO3). However, the emergency system must ensure the pumping of the mixture, its intensive cooling and subsequent sprinkling of parts of the hermetic zone of the reactor with heat dissipation. The function of the system has to be continuous and long-term in a number of months.

In case of a major accident at a nuclear unit, which are beyond the management of standard emergency means, the current legislation requires to take measures that will prevent or mitigate the consequences of the major accidents. A set of measures has been defined for the solution of major accidents. One of these measures is to create a new functionally and energetically autonomous system of long-term effective removal of heat from a hermetic zone, so-called containment. The requirement for creating such system is that the pressure vessel of the reactor affected by the severe accident is cooled from the outside by water, which flows into the reactor shaft from a pool formed on the floor of the hermetic zone. The heated water evaporates and steam escapes into the space of the hermetic zone, which gradually pressurizes and heats the building structure up. If the condition is not solved, there is a risk of violating the integrity of the hermetic zone by a pressure, which is exceeding the safety limit of the building structure. It is therefore necessary to prevent the inner space from being pressurized to the safety limit and to keep the pressure in the hermetic zone low.

There are various technical solutions and proposals of methods for heat dissipation from these spaces.

Systems to solve an event of a major accident in a nuclear reactor are described, for example, in CN204229849, CN103383865 and US4064002. However, there is a difference in a design and connection of components, where a steam turbine is often used as a source of energy, or the circulation of coolant in a primary circuit is not separated.

A long-term heat removal system is also described, for example, in EP 3 451 346 A1. It comprises a cold circuit and a hot circuit, where the cold circuit comprises a pumping station connected by its one side to the cold circuit refrigerant source and by its other side to a turbine, from where the refrigerant is led through a cooler cold circuit back to the cold circuit refrigerant source. The hot circuit comprises a hot circuit pump connected at the inlet to a refrigerant source of the hot circuit, i.e. to the bottom of the containment, and at its outlet to the hot circuit of the radiator, from where the refrigerant is led to a shower. A disadvantage of such solution is, that when the refrigerant at the bottom of the containment reaches the boiling point, it is difficult to pump it, because not only water but also gas is pumped, which causes a deterioration of heat exchange in the exchanger.

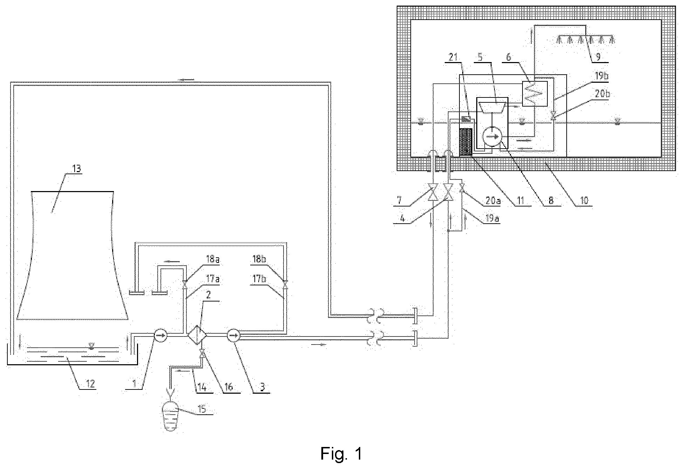

Another variant is a long-term heat removal system from the hermetic zone according to the document PV 2019-576 presented in Fig. 1, which comprises a cold circuit and a hot circuit. The cold circuit comprises a feed pumping station 1 connected by its one side to a refrigerant source of the cold circuit and by its other side to a fine dirt filter 2, which is connected to a main pumping station 3, which is connected via an inlet shut-off valve 4 to a turbine 5 and subsequently via a cold circuit of a cooler 6 and an outlet shut-off valve 7 with a cold circuit refrigerant source, whereby the circuit is closed. The hot circuit comprises a hot circuit pump 8 connected at its outlet via a hot circuit of the cooler 6 to a shower 9 located in the hermetic zone 10, and at its inlet via a mechanical screen 11 to a source of refrigerant of the hot circuit. The main pumping station 3 is further connected to the inlet of the hot circuit pump 8 by means of a primary cold circuit, aftercooling branch 19a comprises a shut-off valve 20a. Because of that the hot circuit refrigerant entering the pump 8 is allowed to be cooled down to a condition which guarantees its proper function.

The cold circuit can be provided with a sludge branch 14, which is led from the fine dirt filter 2 to a sludge tank 15. If the sensors located in the filter 2 detect its fouling, automatic rinsing and drainage of dirt into the sludge tank 15 is performed. The sludge branch 14 is provided with a sludge valve 16.

**The** cold circuit is preferably provided with one or two aftercooling branches 17a and 17b of the cold circuit. The primary aftercooling branch 17a of the cold circuit connects the inlet to the fine impurity filter 2 with the cold circuit refrigerant source. The secondary aftercooling branch 17b of the cold circuit connects the outlet from the main pumping station 3 to the coolant source of the cold circuit. Both of these branches 17a, 17b can be put into operation by means of the control valves 18a, 18b at the moment, when the coolant temperature of the cold circuit is above a predetermined value.

In contrast to the document EP 3 451 346 A1, above mentioned system is provided with a secondary aftercooling branch 19b of the hot circuit, comprises a shut-off valve 20b, which is led from the hot circuit outlet of the cooler 6 to the pump inlet 8. By this way the limited coolant capacity in the hermetic zone 10 for long-term heat dissipation is solved. Without this aftercooling branch, the critical temperature would be exceeded in hours.

According to the example, the description of the principle of operation of the above mentioned long-term heat removal system from the hermetic zone according to the state of the art follows:

Cold water is taken from the pool 12 under a cooling tower 13 of the power plant, or from wells of fan cooling towers 13, by means of the feed pumping station 1 and is transported through a water filter 2, which ensures the required water quality to the main pumping station 3. Both pumping stations 1 and 3 contain pumping units with thermal diesel driver. The pressurized water is led from the main pumping station 3 to the entrance of the hermetic zone 10 of the reactor block. Subsequently, it is fed to the turbine 5 of the hydrodynamic pumping unit and the waste water from the turbine 5 of the hydrodynamic unit is then led to the cold circuit of the heat exchanger or to the cooler 6, where it takes thermal energy from the pumped liquid of the hot circuit and heated it is led from the hermetic zone 10 of the reactor block to the pool 12 below the cooling tower 13 or to sumps of the fan cooling towers 13. The hot circuit pump 8 sucks a hot mixture of water and boric acid from the floor of the hermetic zone 10, filters it through a mechanical screen 11 and discharges it to the heat circuit of the heat exchanger, respectively the cooler 6, and further to a sprinkling system, i.e. the shower 9, located inside the hermetic zone 10, where it provides the desired cooling of important components of the hermetic zone 10 of the reactor.

The disadvantage of the presented system is difficult pumping of the mixture of boiling water and boric acid, especially at the most critical moment, which is beginning of pumping, when the mixture is in the steamed state inside the pump 8.

WO2018/060633A1 presents a turbopump, which comprises a turbine 4b and a pump 4a, where the turbine comprises a turbine housing with an impeller of the turbine located therein, the pump comprises a pump housing with an impeller of the pump located therein, where the impeller of the turbine and the impeller of the pump are interconnected by a shaft 23, and between the turbine housing and the pump housing a coupling housing 20 is arranged, wherein a ring-shaped injection nozzle is connected to the inlet of the pump housing, which forms a circumferential cavity 112, where the circumferential cavity comprises one inlet opening 102 and nozzles 110. Also for this embodiment there is difficulty to pump the mixture of boiling water and boric acid, when the mixture is in the steamed state.

The aim of the present invention is to present a device, which avoids the mentioned disadvantages of the state of the art.

### Feature of the Invention

The above mentioned disadvantages are considerably eliminated by use of the turbopump comprises a turbine 5 and a pump 8, where the turbine 5 comprises a turbine housing 101 with an impeller 102 of the turbine 5 located therein, the pump 8 comprises a pump housing 104 with an impeller 105 of the pump 8 located therein, where the impeller 102 of the turbine 5 and the impeller 105 of the pump 8 are interconnected by a shaft 103, and between the turbine housing 101 and the pump housing 104 a coupling housing 106 is arranged, wherein a ring-shaped injection nozzle 108 is connected to the inlet of the pump housing 104, where the ring-shaped injection nozzle 108 having a circumferential groove on the surface adjacent to the pump housing 104, which forms a circumferential cavity 120, when the injection nozzle 108 and the pump housing 104 are connected, where the circumferential cavity 120 comprises two opposite inlet openings 121a, 121b, and nozzles 125.

In an advantageous embodiment the nozzles 125 are widened at the meeting point to the circumferential cavity 120.

In another advantageous embodiment the nozzles 125 are at an angle α of 52° with regard to the axis of rotation of the shaft.

In another advantageous embodiment the nozzles 125 are radially spaced in an angular period of 10°.

In another advantageous embodiment the end walls of the coupling housing 106 are provided in the region of the shaft 103 with sealing bearing assemblies

**The** above mentioned disadvantages are considerably eliminated by use of the long-term heat removal system from a hermetic zone, which comprises the turbopump according to any of the claims.

### Description of the Drawings

The invention will be further explained by use of drawings, in which Fig. 1 presents a diagram of the long-term heat removal system according to the state of the art, Fig. 2 presents the turbopump according to the invention in the assembled state, Fig. 3 presents the turbopump according to the invention in the dismantled state, Fig. 4 presents a cross section of the injection device of the turbopump according to the invention and Fig. 5 presents a longitudinal section of the injection device of the turbopump according to the invention.

### Preferred Embodiments of the Invention

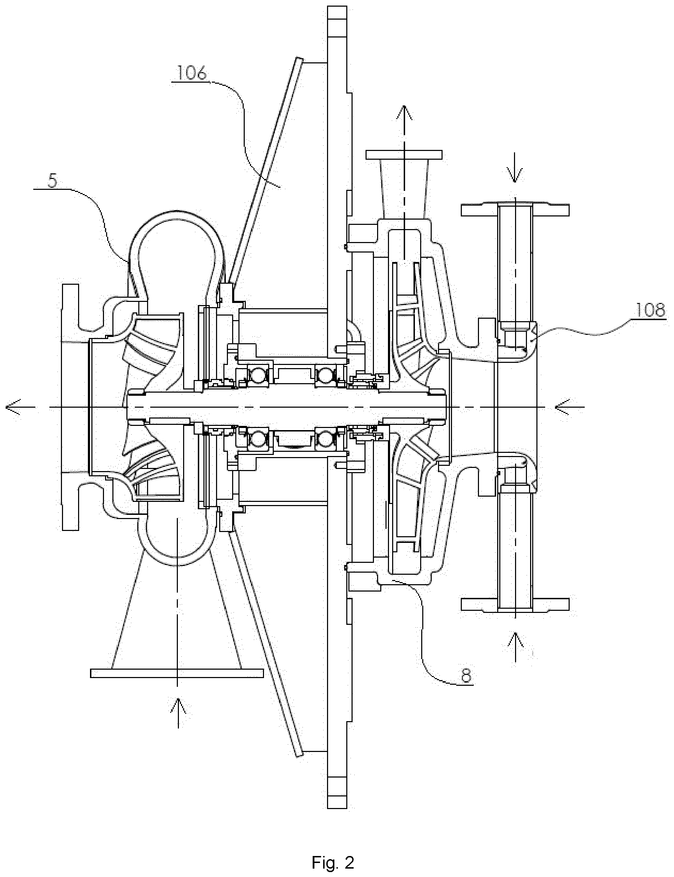

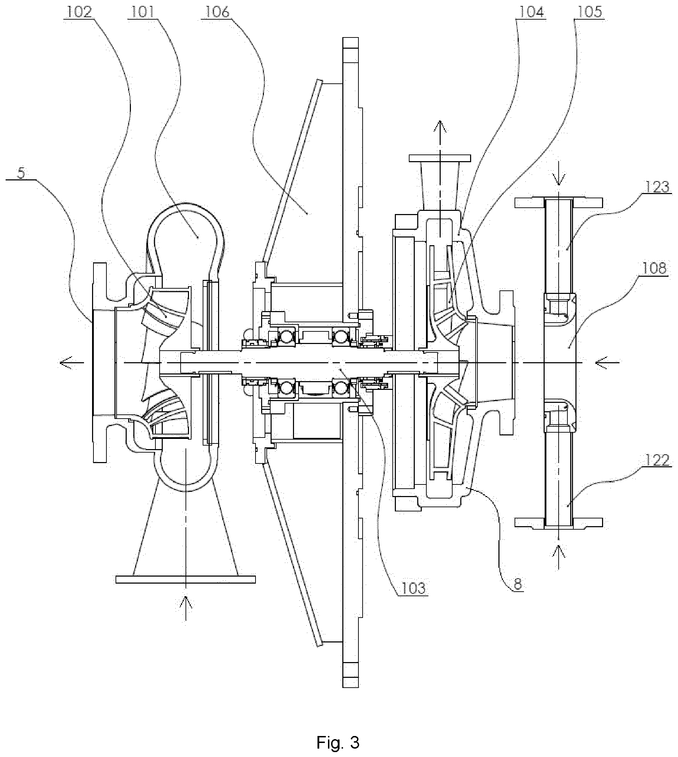

The turbopump according to the invention presented in Figs. 2 and 3 comprises a turbine 5, which comprises a turbine housing 101 with an impeller 102 of the turbine 5 located therein, and a pump 8, which comprising a pump housing 104 with an impeller 105 of the pump 8 located therein, where the impeller 102 of the turbine 5 and the impeller 105 of the pump 8 are interconnected by a shaft 103. The shaft 103 and the impellers 102 and 105 forms a single-rotor system.

Between the turbine housing 101 and the pump housing 104 a coupling housing 106 is arranged, which serves, inter alia, for its firm interconnection. The end walls of the coupling housing 106 are preferably provided in the region of the shaft 103 with sealing bearing assemblies ensuring that no liquid enters the interior of the coupling housing 106 from either the turbine housing 101 or the pump housing 104. The space of the coupling housing 106 is thus a hermetically sealed space preferably equipped with leakage sensors, which are not shown in the figures. The junction box 106 thus serves as a safety and monitoring zone, which separates the clean part of the turbine 5 and the contaminated part of the pump 8.

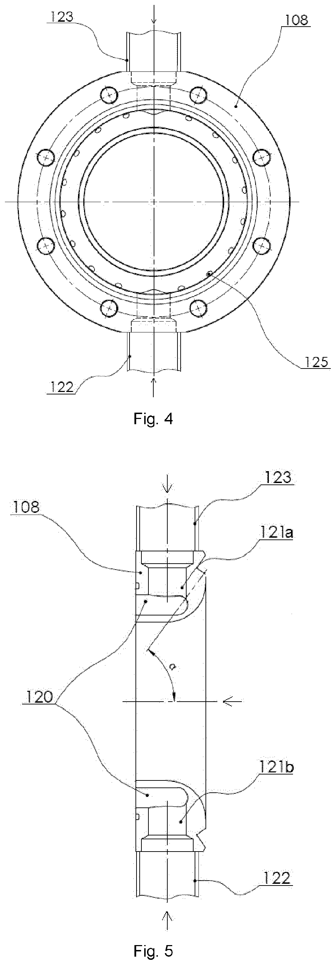

A ring-shaped injection nozzle 108 is connected to the inlet of the pump housing 104, see Fig. 4 and 5, having a circumferential groove on the surface adjacent to the pump housing 104, which forms a circumferential cavity 120, when the injection nozzle 108 and the pump housing 104 are connected.

**This** circumferential cavity 120 comprises two opposite inlet openings 121a, 121b, where to one of them a cold water inlet 122 is brought and to the other one an inlet 123 of cooled mixture of water and H3BO3 is brought from a cooler 7. Furthermore, nozzles 125 project from the circumferential cavity 120 at an angle α, preferably 52°, radially spaced in an angular period of 10°. The nozzles 125 have a cylindrical shape close to the orifice with a sudden expansion to increase turbulence of the discharge jet.

The input flow led to the impeller 105 of the pump 8 is supplied in the axis of the injection nozzle 108 in the direction of the arrow. The inner diameter of the injection nozzle 108 widens at the inlet. The curve of the rotationally symmetric input has shape of lemniskat. The optimal geometry of the injection nozzle 108 obtained by numerical model of flow minimizes the consumption of external cold sprayed water to achieve the desired effect.

The turbopump according to the invention is primarily intended for a long-term heat removal system from the hermetic zone according to the document PV 2019-576, where the supply openings 121 are led to the peripheral cavity 120 of the injection nozzle 108. Into the first inlet opening 121a a cold water inlet 122 is brought, which supply cold water through the primary aftercooling branch 19a of the cold circuit to the annular cavity 120, which subsequently exits through the nozzles 125 into the suction space of the turbopump according to the invention. By cooling of the suction space and by removing of the steamed state of the mixture, a safe start and run-up of pumping is enabled. The cold water for injection supplied by the primary aftercooling branch 19a of the cold circuit is used in the initial stages of start and run-up of pumping and is subsequently switched off by means of the valve 20a. The injection function is taken over by a cooled mixture of water and boric acid, which is fed from the cooler 6 by the secondary aftercooling branch 19b of the hot circuit, i.e. by the cooled mixture inlet 123, to the second inlet 121b and subsequently to the annular cavity 120 of the injection nozzle 108 to the required flow (reflux) of the cooled mixture.

The pumping function of the turbopump according to the invention is safely ensured because of the function of the injection nozzle 108 from the beginning of the cold water injection and run-up of pumping, when reflux of the cooled mixture is not yet available, and subsequently in a time period of combined supply of cold water and reflux of the mixture to the injection nozzle 108, until the cold water injection is switched off and it is operated only with the mixture cooled by reflux. The cold water injection has to be switched off in order not to increase the amount of liquid charge in the hermetic zone of the reactor above the preset limit, but it can be renewed at any time if necessary, since the valve 20b is operated outside the reactor building.

For safety reasons, the installation inside the hermetic zone 10 can be identically doubled and connected in parallel to the cold circuit, i.e. two turbopumps according to the invention can be used in parallel. The main pumping station 3 is thus connected via shut-off valves 4 to both the pump 8 of one hot branch and the pump 8 of the other hot branch. However, only one indoor installation is always operated, i.e. the hot branch. The second installation forms a 100% operating reserve.

**The** system according to the invention is fully autonomous, independent of a technological equipment of a nuclear reactor and of an external energy source, in particular of an electrical supply. An exception is components of the system, which are located outside of the hermetic zone and which are freely available even in the conditions of an ongoing major accident, even only for a limited time, especially during refueling of thermal engines.

The advantage of the turbopump according to the invention or the heat dissipation system according to the invention is to ensure the most important function of the emergency safety system, which is pumping of the mixture of boiling water and boric acid, especially at the most critical moment, which is start and run-up point, when it is necessary to eliminate the steamed state of the mixture in the interior of the pump, and to ensure long-term pumping of this mixture with the required hydraulic power.

## Claims

1. A turbopump comprising a turbine 5 and a pump 8, where the turbine 5 comprises a turbine housing 101 with an impeller 102 of the turbine 5 located therein, the pump 8 comprises a pump housing 104 with an impeller 105 of the pump 8 located therein, where the impeller 102 of the turbine 5 and the impeller 105 of the pump 8 are interconnected by a shaft 103, and between the turbine housing 101 and the pump housing 104 a coupling housing 106 is arranged, wherein a ring-shaped injection nozzle 108 is connected to the inlet of the pump housing 104, **characterized in, that** the ring-shaped injection nozzle 108 has a circumferential groove on the surface adjacent to the pump housing 104, which forms a circumferential cavity 120, when the injection nozzle 108 and the pump housing 104 are connected, where the circumferential cavity 120 comprises two opposite inlet openings 121a, 121b, and nozzles 125.

2. The turbopump according to the claim 1, **characterized in, that** the nozzles 125 are widened at the meeting point to the circumferential cavity 120.

3. The turbopump according to any of the claims 1 to 2, **characterized in, that** the nozzles 125 are at an angle α of 52° with regard to the axis of rotation of the shaft.

4. The turbopump according to any of the claims 1 to 3, **characterized in, that** the nozzles 125 are radially spaced in an angular period of 10°.

5. The turbopump according to any of the claims 1 to 4, **characterized in, that** the end walls of the coupling housing 106 are provided in the region of the shaft 103 with sealing bearing assemblies.

6. Long-term heat removal system from a hermetic zone, **characterized in, that** it comprises the turbopump according to any of the claims 1 to 5.

## Patentansprüche

1. Die eine Turbine (5) und eine Pumpe (8) enthaltene Turbopumpe, wo
- die Turbine (5) weiter ein Turbinengehäuse (101) und darin versehenes Laufrad (102) der Turbine (5) enthält,
- die Pumpe (8) weiter ein Pumpengehäuse (104) und darin versehenes Laufrad (105) der Pumpe (8) enthält,
- wo das Laufrad (102) der Turbine (5) und das Laufrad (105) der Pumpe (8) gegenseitig mittels einer Welle (103) verbunden sind,
- und zwischen dem Turbinengehäuse (101) und dem Pumpengehäuse (104) ein Anschlussgehäuse (106) versehen ist,
**wird dadurch gekennzeichnet, dass**
- zum Einlasshals des Pumpengehäuses (104) eine Einspritzdüse (108) in der Ringform angeschlossen ist und enthaltend
- auf der zum Pumpengehäuse (104) liegenden Fläche eine Außennut, die nach Aufsetzen der Einspritzdüse (108) zum Pumpengehäuse (104) eine Außenöffnung (120) bildet, die zwei gegenseitig liegenden Einlassöffnungen (121a, 121b) und Düsen (125) enthält.

2. Turbopumpe nach Anspruch 1, **dadurch gekennzeichnet, dass** Düsen (125) näher zur Mündung in die Außenöffnung (120) erweitert sind.

3. Turbopumpe nach einem von den oben genannten Ansprüchen, **dadurch gekennzeichnet, dass** Düsen (125) zur Achse der Wellenrotation unter Winkel 52° sind.

4. Turbopumpe nach einem von den oben genannten Ansprüchen, **dadurch gekennzeichnet, dass** Düsen (125) radial in Winkelperiode von 10° angeordnet sind.

5. Turbopumpe nach einem von den oben genannten Ansprüchen, **dadurch gekennzeichnet, dass** die Stirnwände des Anschlussgehäuses (106) an der Wellenstelle (103) mit Dichtungslagersätzen versehen sind.

6. Langzeitwärmeabfuhrsystem aus einer hermetischen Zone, **dadurch gekennzeichnet, dass** es eine Turbopumpe nach einem von den Ansprüchen 1 - 5 enthält.

## Revendications

1. Turbopompe comprenant une turbine 5 et une pompe 8, où la turbine 5 comprend un carter 101 de turbine avec une roue 102 de la turbine 5 située dans celui-ci, la pompe 8 comprend un carter 104 de turbine avec une roue 105 de la pompe 8 située dans celui-ci, où la roue 102 de la turbine 5 et la roue 105 de la pompe 8 sont interconnectées par un arbre 103, et entre le carter 101 de turbine et le carter 104 de pompe un carter 106 d'embrayage est disposé, où une buse 108 d'injection annulaire est connectée à l'entrée du carter 104 de pompe,
**caractérisée en ce que** la buse 108 d'injection annulaire présente une rainure circonférentielle sur la surface adjacent au carter 104 de pompe, qui forme une cavité 120 circonférentielle, lorsque la buse 108 d'injection et le carter 104 de pompe sont connectés, où la cavité 120 circonférentielle comprend deux ouvertures 121a, 121b d'entrée, et des buses 125.

2. Turbopompe selon la revendication 1, **caractérisée en ce que** les buses 125 sont élargies au point de jonction à la cavité 120 circonférentielle.

3. Turbopompe selon l'une quelconque des revendications 1 à 2, **caractérisée en ce que** les buses 125 forment un angle α de 52° par rapport à l'axe de rotation de l'arbre.

4. Turbopompe selon l'une quelconque des revendications 1 à 3, **caractérisée en ce que** les buses 125 sont espacées radialement avec une période angulaire de 10°.

5. Turbopompe selon l'une quelconque des revendications 1 à 4, **caractérisée en ce que** les parois d'extrémité du carter 106 d'embrayage sont disposées dans la région de l'arbre 103 avec des ensembles de palier et d'étanchéité.

6. Système d'élimination de chaleur à long terme d'une zone hermétique, **caractérisé en ce qu'**il comprend la turbopompe selon l'une quelconque des revendications 1 à 5.
